# EUROPEAN PATENT SPECIFICATION

(11) **EP 1 235 322 B1**
(45) Date of publication and mention of the grant of the patent: **02.11.2005**
(21) Application number: 02380039.4
(22) Date of filing: 20.02.2002
(51) Int. Cl.: H02J 3/18, G05F 1/20

(54) **Voltage stabiliser for electrical energy transmission and distribution applications**
Spannungsstabilisator für elektrische Energieübertragungs und Verteilungsanwendung
Stabilisateur de tension appliqué au transfert et à la distributrion d'énergie électrique

(30) Priority: 23.02.2001 ES 200100424
(43) Date of publication of application: 28.08.2002
(73) Proprietor: UNIVERSIDAD PONTIFICIA COMILLAS, 28015 Madrid (ES)
(72) Inventor: Soler Soneira, David, 28034 Madrid (ES); Chao Gomez, Rafael, 28230 Las Rozas (Madrid) (ES)
(74) Representative: Riera Blanco, Juan Carlos

(56) References cited:
- EP-A- 1 054 502
- ES-A- 2 179 764
- FR-A- 2 045 180
- GB-A- 1 508 779
- US-A- 5 969 511
- US-A- 6 137 277

## Description

### OBJECT OF THE INVENTION

The herein descriptive specification refers to an Invention Patent application, in relation to a voltage stabiliser for electrical energy transportation and distribution applications, the aim of which is to enable its use as a voltage stabiliser at different electrical energy voltage levels, capable of being installed in single phase and three phase networks, consisting of one or several electromagnetic devices of transformer type and which, in incremental steps, regulates the output voltage which reaches the consumers.

### FIELD OF THE INVENTION

This invention is for application within the industry dedicated to the distribution of electrical energy, to be precise within electrical networks with large voltage drops.

### BACKGROUND OF THE INVENTION

Problems with the regulation of voltage in electrical energy distribution networks are customary, as is the implantation of equipment with the aim of mitigating the problem.

Worth mentioning is the embodiment as auto-transformers with intake points, controlled by static or mechanical switches, as well as the use of motorised, continuously regulated auto-transformers.

This equipment performs the function required of them, but at the price of a large economic investment and/or a considerable reduction in supply reliability.

For its part the applicant is unaware of the current existence of any voltage stabiliser for electrical energy transportation and distribution applications that is designed to be implanted in electrical networks with large voltage drops and which presents the same features as the one described in this specification.

It is known from document EP-1 054 502, that an alternate current feed source with electronically regulated voltage is provided, wherein the use of two or more boosters are proposed whose respective secondary coil is connected in series with the line phase whose Voltage is to be regulated, the primary coils of each booster being controlled by a rapid switching system via which each booster can remain disconnected or energised, while the respective rapid switching systems are controlled by an electronic processing unit with which the output voltage of the line is controlled, in such a way that depending on the value of the line voltage detected by the aforementioned electronic processing unit, the latter determiners, where appropriate, activation of one or more of the boosters in order to give the line, from each of the boosters activated, voltage values which, depending on whether the line voltage level is below or above a nominal value, the values supplied from the boosters will have the same or opposite phase so as to increase or reduce, as appropriate, the value of the line voltage and thereby produce the desired regulation.

### DESCRIPTION OF THE INVENTION

The voltage stabiliser for electrical energy transportation and distribution applications proposed by the invention constitutes in itself an evident innovation within its field of application.

To be more precise, the voltage stabiliser for electrical energy transportation and distribution applications takes the form of a voltage stabiliser for electrical energy transportation and distribution applications, admitting of installation in single phase and three phase networks, consisting of one or several electromagnetic devices of transformer type and which, in incremental steps, regulates the output voltage which reaches the consumers.

The basic regulation device consists of a transformer with a primary dual or quadruple winding, and with a simple secondary winding, prepared to withstand the line's full intensity.

The simple winding may be positioned before or after the parallel branch, the performance of the equipment remaining the same.

With the aid of the appropriate commutation of the primary windings, corrections are made to the output voltage, with the purpose of keeping it within pre-set margins.

This basic element offers features of very considerable economy, robustness and efficacy, the output discretisation being five or nine-step, which makes the invention of interest to installations where there is a major problem of voltage regulation and where a coarse regulation is required at around the nominal voltage value.

Nevertheless, should greater resolution be needed, the invention admits the use of devices in series, with regulations stepped 4:1.

### DESCRIPTION OF THE DRAWINGS

In order to complement the herein description, and with the aim of assisting in the better understanding of the invention's characteristics, attached to the herein specification, and forming an integral part of it, is a set of plans in which, by way of illustration and in no way limiting, the following has been depicted:

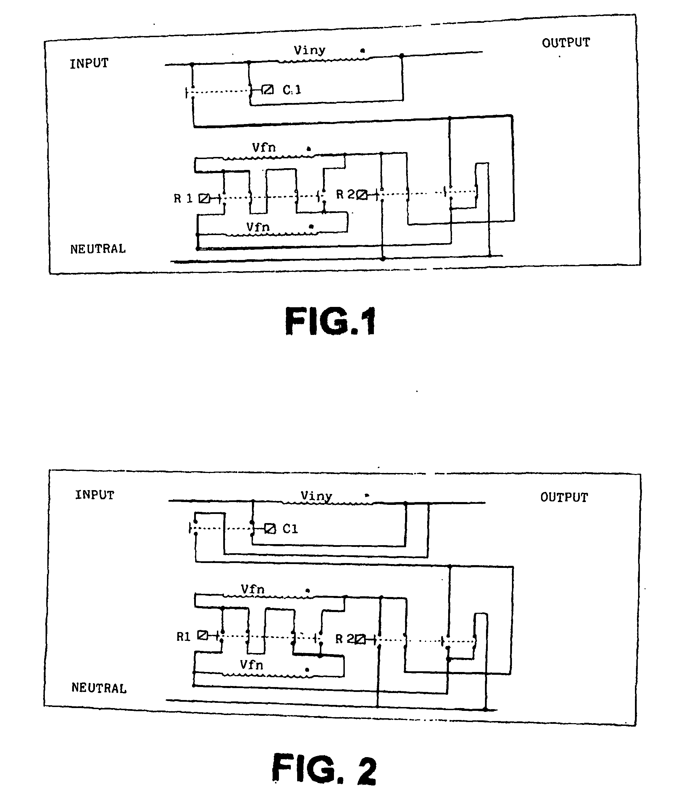

Figure 1.- offers a graphic representation of the single phase scheme equivalent of the equipment's power circuit and shows, to be more precise, the downstream compensation which allows the main transformer's power to be reduced, at the price of not exploiting to the full the magnetic circuit at non-nominal voltages. Figure 1 corresponds to the object of the invention relating to a voltage stabiliser for electrical energy transportation and distribution applications.

Figure 2.- offers a view similar to that shown in figure 1, exploiting to the full the magnetic circuit at non-nominal voltages as a consequence of upstream compensation.

### PREFERRED EMBODIMENT OF THE INVENTION

The voltage stabiliser for electrical energy transportation and distribution applications which is being proposed and which is specifically designed for electrical energy transportation and distribution applications, may be embodied for a single phase or three phase network. The elements specified are those used in the single phase equipment, but it should be pointed out that the construction of the three phase stabiliser is immediate given that all that is needed is to triplicate the equipment if one control per phase is desired, or to triplicate the number of contactor and relay poles, should a joint control be desired.

As may be seen in figures 1 and 2, there are two variants of the single phase scheme equivalent of the equipment's power circuit, the difference as shown between both residing in the fact of whether the line compensation is before or after the parallel branch.

The downstream compensation, shown in figure 1, allows the main transformer's power to be reduced, at the price of not exploiting to the full the magnetic circuit at non-nominal voltages. There is full exploitation in upstream compensation, the scheme for which is shown in figure 2.

The voltage stabiliser for electrical energy transportation and distribution applications is composed of a transformer, trip/contactor/relay elements and a control panel.

The transformer takes the shape of a transformer whose primary voltage is the same as the line's nominal single phase voltage (Vfn), as referred to in the figures mentioned above, and whose secondary voltage is the same as the maximum voltage increase that it is wished to inject into the line (Viny), also to be seen in the figures.

The primary winding is coiled double in two electromagnetically identical coils. This enables it to be connected at the 2*Vfn/Viny connection too.

In the case of downstream compensation, as shown in figure 1, the power of this machine will be Viny*Ilinea, where Ilinea is the nominal current of the line on the stabilised side. In the case of upstream compensation, the scheme for which is shown in figure 2, the power of this machine will be Viny*Ilinea (1+Viny/Vfn), albeit the services of compensation provided are higher.

With respect to the trip/contactor/relay elements, it should be pointed out that the equipment requires a power-cutting element (C1) with one normally closed contact (NC) and another normally open (NO), at a nominal line current.

In addition two isolator elements (R1 and R2) are needed, each of which is provided with two normally open contacts and two normally closed contacts (NO and NC respectively), with a nominal V_{fn}/V_{iny}, the current of the line These two elements may be substituted by static cutting elements.

As for the control panel, it should be pointed out that it consists of a microprocessor which measure the output voltage and sends the orders to the trip, contactor and relay elements, in order that they are correctly configured for adjusting the voltage within limits.

As for the mode of operation, it should be pointed out that the configuration of the contactors as shown in figure 1 allows for five possible manoeuvres to be carried out. Namely:
- With C1, that is to say the power cutting elements, at rest and the isolator elements in any position, the equipment is physically disconnected from the network. It should be pointed out that this mode of operation allows the continuity of the supply to be guaranteed in the face of a failure in the equipment, as well as avoiding the introduction of losses in the non-stabilisation situation.
- With C1 activated and the two isolator elements at rest, the regulator multiplies the input voltage by (1+0.5*V_{fn}/V_{iny}). In nominal conditions this means an injection of +0.5* V_{fn}/V.
- With C1 and R1 activated and R2 at rest, the regulator injects into the network a voltage of +V_{iny} V in nominal conditions.
- With C1 and R2 activated and R1 at rest, the regulator injects into the network a voltage of -0.5 V_{iny} V in nominal conditions.
- With C1, R1 and R2 activated, the regulator injects into the network a voltage of -V_{iny} V in nominal conditions.

That is to say, C1, to be precise the power cutting element, connects the equipment, while one isolator element (R1) determines the magnitude of the trip (0.5*V_{iny} or V_{iny}) and the other isolator element (R2) determines the configuration's polarity (+/-).

The control of the basic element measures in network cycle real time the effective values of the equipment's output voltages, thus permitting them to be stabilised within a margin of [V_{fn} +/- V_{iny} /4], provided that the input voltage lies within the interval [V_{fn} +/- V_{iny} /4].

The voltage compensation manoeuvres are carried out in line with the following process, namely:
1.- Deactivation of C1.
2.- With the aid of C1's auxiliary contact, verification that the manoeuvre was carried out correctly.
3. - Activation/deactivation of R1 and R2 (manoeuvre without voltage or current).
4.- Activation of C1.

## Claims

1. Voltage stabiliser for electrical energy transportation and distribution applications, of the kind designed for use as a voltage stabiliser for electrical energy transportation and distribution applications, able to be installed in single phase and three phase networks, consisting of one or several electromagnetical devices of transformer type, which discrete in incremental steps regulates the output voltage that reaches the consumer, **characterised in that** it comprises a transformer, trip/contactor/relay elements, and a control panel, the transformer taking the form of a transformer of primary voltage similar to the nominal single phase line voltage (Vfn) and of secondary voltage equal to the maximum voltage increase it is wished to inject into the line (Viny), the primary winding being double-wired wound in two electromagnetically identical coils, including a power-cutting element (C1) provided with one normally closed contact and one normally open contact having a nominal current corresponding to the nominal current of the line and incorporating two isolator elements (R1 and R2), each of which is provided with two normally open and two normally closed contacts, with a nominal current of V_{fn}/V_{iny}, the current of the line and wherein a microprocessor mounted on a control panel measures the output voltage and sends the orders to the trip, contactor and relay elements.

2. Voltage stabiliser for electrical energy transportation and distribution applications, according to the first claim, **characterised in that** the isolator elements R1 and R2 may be substituted by solid state elements.

3. Voltage stabiliser for electrical energy transportation and distribution applications, according to the first claim, **characterised in that** the stabiliser may be embodied for a three phase network by triplicating the equipment.

4. Voltage stabiliser for electrical energy transportation and distribution applications, according to the first and the third claims, **characterised in that** the stabiliser may be embodied for a three phase network by triplicating the number of contactor and relay poles for their joint control.

5. Voltage stabiliser for electrical energy transportation and distribution applications, according to the first claim **characterised in that** the primary winding is double wound in two electromagnetically identical coils, thus permitting its connection at the 2*Vfn/viny connection, giving a power in the case of downstream compensation of viny*Ilinea, where Ilinea is the nominal line current on the stabilised side.

6. Voltage stabiliser for electrical energy transportation and distribution applications, according to the first and the fifth claims, **characterised in that** the upstream compensation of voltage gives a stabiliser power of Viny*Ilinea (1+Viny/Vfn).

7. Voltage stabiliser for electrical energy transportation and distribution applications, according to the preceding claims, **characterised in that** it is endowed with a transformer with a primary winding provided with two or four coils, which may be connected in series, in parallel or in series and parallel.

8. voltage stabiliser for electrical energy transportation and distribution applications, according to the first and the seventh claims, **characterised in that** it incorporates a charge cutting element and two isolator elements for disconnecting the primary and short-circuiting the secondary.

## Patentansprüche

1. Spannungsstabilisator für Anwendungen zum Transport und zur Verteilung von elektrischer Energie, der Art, die zur Benutzung als Spannungsstabilisator für Anwendungen zum Transport und zur Verteilung von elektrischer Energie konstruiert sind, geeignet um in einphasigen oder dreiphasigen Netzwerken installiert zu werden, bestehend aus einer oder mehreren elektromagnetischen Vorrichtungen von Transformatoren-Typen, die die Ausgangsspannung, die den Verbraucher erreicht, unstetig in inkrementellen Schritten reguliert, **dadurch gekennzeichnet, dass** er einen Transformator, Auslöse-/Schaltschütz-/Relais-Elemente und eine Schalttafel umfasst, wobei der Transformator die Form eines Transformators mit Primärspannung annimmt, die ähnlich der nominalen Einphasen-Leitungs-Spannung (Vfn) ist und mit Sekundärspannung, die dem maximalen Spannungs-Anstieg entspricht, von dem gewünscht wird, in die Leitung (Viny) injiziert zu werden, wobei die primäre Wicklung doppelt verdrahtet um zwei elektromagnetisch identische Spulen gewickelt ist, der ein Energie-Trennungs-Element (C1) einschließt, das mit einen normal geschlossenen Kontakt und einen normal geöffneten Kontakt ausgestattet ist, der einen Nennstrom hat, der dem Nennstrom der Leitung entspricht, und zwei Isolations-Elemente (R1 und R2) inkorporiert, wobei jedes von diesen mit zwei normal geöffneten und zwei normal geschlossenen Kontakten ausgestattet ist, mit einem Nennstrom von V_{fn}/V_{iny}, der Strom der Leitung, und wobei ein Mikroprozessor auf der Schalttafel montiert ist, der die Ausgangsspannung misst und die Befehle zu den Auslöse-, Schaltschütz-und Relais-Elementen sendet.

2. Spannungsstabilisator für Anwendungen zum Transport und zur verteilung von elektrischer Energie nach dem ersten Anspruch, **dadurch gekennzeichnet, dass** die Isolations-Elemente R1 und R2 durch monolithische Elemente ersetzt werden können.

3. Spannungsstabilisator für Anwendungen zum Transport und zur Verteilung von elektrischer Energie nach dem ersten Anspruch, **dadurch gekennzeichnet, dass** der Stabilisator durch die Verdreifachung der Ausstattung für ein Dreiphasen-Netzwerk ausgeführt werden kann.

4. Spannungsstabilisator für Anwendungen zum Transport und zur Verteilung von elektrischer Energie nach dem ersten und dem dritten Anspruch, **dadurch gekennzeichnet, dass** der Stabilisator durch die Verdreifachung der Anzahl der Schaltschütz- und Relais-Pole zu ihrer Verbindungskontrolle für ein Dreiphasen-Netzwerk ausgeführt werden kann.

5. Spannungsstabilisator für Anwendungen zum Transport und zur Verteilung von elektrischer Energie nach dem ersten Anspruch, **dadurch gekennzeichnet, dass** die primäre wicklung doppelt um zwei elektromagnetisch identische Spulen gewickelt ist, wodurch ihre Verbindung bei der 2=Vfn/Viny-verbindung gestattet wird, wobei für den Fall einer Stromabwärts-Kompensation der Viny*Ilinea Energie abgegeben wird, wobei Ilinea der Nominalleitungsstrom der stabilisierten Seite ist.

6. Spannungsstabilisator für Anwendungen zum Transport und zur Verteilung von elektrischer Energie nach dem ersten und nach dem fünften Anspruch, **dadurch gekennzeichnet, dass** die Stromaufwärts-Kompensation der Spannung eine Stabilisator-Energie von Viny-Ilinea (1+Viny/Vfn) ergibt.

7. Spannungsstabilisator für Anwendungen zum Transport und zur Verteilung von elektrischer Energie nach den vorhergehenden Ansprüchen, **dadurch gekennzeichnet, dass** er mit einem Transformator mit einer primären Wicklung ausgestattet ist, die mit zwei oder vier Spulen ausgestattet ist, die in Serie oder parallel oder in Serie und parallel geschaltet werden können.

8. Spannungsstabilisator für Anwendungen zum Transport und zur Verteilung von elektrischer Energie nach dem ersten und dem siebten Anspruch, **dadurch gekennzeichnet, dass** er ein Ladungs-Trennungs-Element und zwei Isolations-Elemente zur Trennung der Primären und zur Ausschaltung der Sekundären inkorporiert.

## Revendications

1. Stabilisateur de voltage pour applications de transport et distribution d'énergie électrique, du type conçu pour l'utilisation comme stabilisateur de voltage pour applications de transport et distribution d'énergie électrique, pouvant être installé dans des réseaux monophasés et triphasés, constitués d'un ou de plusieurs dispositifs électromagnétiques de type transformateur, qui régule discrètement en étapes croissantes la puissance de voltage qui arrive au consommateur, **caractérisé en ce qu'**il comprend un transformateur, des éléments d'ouverture/conjoncteur/relais, et un tableau de contrôle, le transformateur prenant la forme d'un transformateur de voltage primaire similaire au voltage de ligne nominal monophasé (vfn), et de voltage secondaire égal à l'accroissement de voltage maximum requis pour introduire dans la ligne (viny), le bobiné primaire étant un enroulement de double fil dans deux bobines électromagnétiques identiques, qui incluent un élément de coupure de courant (C1) muni d'un contact fermé de forme normale et d'un contact ouvert de forme normale, ayant un courant nominal qui correspond au Courant nominal de la ligne et qui incorpore deux éléments isolants (R1 et R2), chacun d'eux étant muni, de deux contacts, un ouvert de forme normale et deux fermés de forme normale, avec un courant nominal V_{fn}/V_{iny}, le courant de la ligne sur laquelle un microprocesseur monté dans un tableau de contrôle mesure le voltage de sortie et envoie des ordres aux éléments d'ouverture/conjoncteur/relais.

2. Stabilisateur de voltage pour applications de transport et distribution d'énergie électrique selon la première revendication, **caractérisé en ce que** les éléments isolants RJ. et R2 peuvent être remplacés par des éléments d'état solide.

3. Stabilisateur de voltage pour applications de transport et distribution d'énergie électrique selon la première revendication, **caractérisé en ce que** le stabilisateur peut être réalisé pour un réseau triphasé en multipliant par trois l'équipement.

4. Stabilisateur de voltage pour applications de transport et distribution d'énergie électrique selon la première et la troisième revendication, **caractérisé en ce que** le stabilisateur peut être réalisé pour un réseau triphasé en multipliant par trois le nombre de pôles pour conjoncteurs et de relais pour leur contrôle commun.

5. Stabilisateur de voltage pour application de transport et distribution d'énergie électrique selon la première revendication, **caractérisé en ce que** le bobiné primaire est un enroulement double dans deux bobines électromagnétiques identiques, permettant ainsi qu'il soit connecté à la connexion 2 vfn/Viny, donnant une puissance dans le cas d'une compensation courant en dessous du courant de Viny*Iligne, où Iligne est le courant de la ligne nominal du côté stabilisé.

6. Stabilisateur de voltage pour applications de transport et distribution d'énergie électrique selon la première et la cinquième revendication, **caractérisé en ce que** la compensation courant au-dessus du voltage donne une puissance du stabilisateur de Viny*Iligne (1+Viny/Vfn).

7. Stabilisateur de voltage pour applications de transport et distribution d'énergie électrique selon les revendications précédentes, **caractérisé en ce qu'**il est doté d'un transformateur avec un bobiné primaire pourvu de deux ou quatre couronnes, qui peuvent être connectées en série, en parallèle ou en série et parallèle.

8. Stabilisateur de voltage pour applications de transport et distribution d'énergie électrique selon la première et la septième revendication, **caractérisé en ce qu'**il incorpore un élément de coupure de charge et deux éléments isolants pour déconnecter le primaire et mettre en court-circuit le secondaire.
